# EUROPEAN PATENT APPLICATION

(11) **EP 2 798 953 A1**
(43) Date of publication of application: **05.11.2014**
(21) Application number: 13002322.9
(22) Date of filing: 30.04.2013
(51) Int. Cl.: A01N 1/02

(54) **Method for cyropreservation of cells using a signal or effector protein/ peptide/compound which affects the osmoregulation or general transporting prcoesses of the cells**

(71) Applicant: Max-Planck-Gesellschaft zur Förderung der Wissenschaften e.V., 80539 München (DE)
(72) Inventor: Wehner, Frank, 44265 Dortmund (DE); Bastiaens, Philippe I. H., 42119 Wuppertal (DE); Azer, Lale, 44649 Herne (DE); Christmann, Jens, 44799 Bochum (DE)
(74) Representative: Katzameyer, Michael

(57) **Abstract**

The present invention relates to the use of a signal or effector protein/peptide/compound which affects the osmoregulation or general transporting processes of cells for cryoconservation and to a method for cryopreservation of cells using such a signal or effector protein/peptide/compound.

The claimed method comprises at least the following steps:
a) contacting the cells with a signal or effector protein/peptide/compound having at least one of the following properties:
- capable to affect the osmoregulation of cells,
- capable to affect general transporting processes in cells which result in notable differences of the physiological parameters of cooled cells before and after freezing and/or of the distribution of osmolytes and water in said cells,
- capable to affect regulatory processes which involve membrane-bound transporters,
for a predetermined time which is sufficient to allow the signal or effector protein/peptide/compound to display a cryoprotective effect on said cells, and

b) cooling the cells to a target temperature below 0°C.

More specifically, the signal or effector protein/peptide/- compound is selected from the group comprising antidiuretic hormones, in particular vasopressin and its derivatives, aldosteron and its derivatives, cytokines, in particular TNF-α, that affect hypertonicity-induced cation channels (HICCS).

## Description

### Background of the invention

The present invention relates to the use of a signal or effector protein/peptide/compound which affects the osmoregulation or general transporting processes of cells for cryoconservation and to a method for cryopreservation of cells using such a signal or effector protein/peptide/- compound.

A number of methods for cryopreservation of cells are known in the art and used routinely. Typically, these methods involve a slow cooling process, e.g. with cooling rate of about -1°C/min, to a temperatur well below the freezing point, e.g. around -50°C or even lower, and a relatively fast thawing process (such as 60°C/min). In order to prevent or minimize damage of the cells during the freezing or thawing process, generally the use of cryoyprotectants is considered to be compulsory. Such cryoprotectants may act via different mechanisms. For example, one class of cryoprotectants, such as DMSO or glycerol, reduce the formation of ice crystals in the intracellular and/or extracellular space of the cells. Usually, the freezing or thawing protocol is interrupted at about +5°C in order to add or safely remove the respective cryoprotectant. Depending on the respective cell type, the survival rates may vary over a wide range. Whereas most cell types have survial rates in the range from about 70-95%, for some cells, e.g. stem cells, the yield may be much lower, such as 1 % or even less.

Other classes of cryoprotectants, such as trehalose and other sugars or various long-chained polymers, are known to "stabilize" the cells and the addition of viscosity-increasing agents, such as gels, has also been reported to slightly improve the survival rates. However, the addition of the latter complicates handling of the samples in the course of temperature changes and returning the cells after thawing to essentially physiological culture conditions.

Considerable efforts have been made in the past to develop further cryoprotectants which are less toxic than the aditives commonly used (in particular DMSO and similar compounds) and which also result in a significant increase of the survival rates and vitality of the cells. However, in the last decades no substances with really improved performance have been added to the list of established cryoprotectants.

In view of the drawbacks of the prior art, the main object of the present invention was to provide novel and improved means for the protection of cells during cryopreservation which do not involve the use of toxic compounds, can be readily implemented in established cryopreservation protocols and which result in a significant increase of the survival rates and vitality (in particular proliferation capability) of the cells.

This objective has been achieved by providing the use of a signal or effector protein/peptide/compound as a cryo-protectant according to claim 1 and the method according to claim 2. Additional aspects and more specific embodiments of the invention are the subject of further claims.

### Description of the invention

The present invention provides the use of a signal or effector protein/peptide/compound having at least one of the following properties:
- capable to affect the osmoregulation of cells,
- capable to affect general transporting processes in cells which result in notable differences of the physiological parameters of cooled cells before and after freezing and/or of the distribution of osmolytes and water in said cells,
- capable to affect regulatory processes which involve membrane-bound transporters,
as a cryoprotectant for cells.

In a closely related aspect, the present invention provides a method for cryopreservation of cells, which method comprises at least the following steps:
a) contacting the cells with a signal or effector protein/peptide/compound having at least one of the following properties:
   - capable to affect the osmoregulation of cells,
   - capable to affect general transporting processes in cells which result in notable differences of the physiological parameters of cooled cells before and after freezing and/or of the distribution of osmolytes and water in said cells,
   - capable to affect regulatory processes which involve membrane-bound transporters, for a predetermined time which is sufficient to allow the signal or effector protein/peptide/compound to display a cryoprotective effect on said cells, and
b) cooling the cells to a target temperature below 0°C.

The term "cryoprotective effect", as used herein, means any effect which, after cryopreservation of target cells, results in an increase of the survival rates and/or vitality (in particular as measured by the proliferation capability) of said cryopreserved cells. Consequently, a "cryo-protectant" is any agent which causes such an effect.

If cells are subjected to a hypertonic stress, e.g. induced by increasing the external osmolarity, at physiological temperatures, i.e. about +35°C, the cells initially react like a osmometer by reducing their volume. This is due to the high water permeability of the plasma membrane caused on the molecular level by the presence of nearly ubiquitary expressed passive water channels, so-called aquaporins. Subsequently, a "regulatory volume increase" (RVI) of the cells follows which is an active response of the cells wherein an influx of ions according to their respective gradient takes place and concomitantly water is transported by osmosis into the cells. The RVI is mainly realized via "hypertonicity-induced cation channels (HICCs) (Wehner (2006), Contrib. Nephrol. 152, 25-53).

The freezing process during cryopreservation is also known to be accompanied by a dehydration of the cells. For example, at temperatures below -10°C the formation of extracellular ice crystals results in a thermodynamically driven loss of water through the plasma membrane (Spindler et al. (2012), Cryobiology 64, 250-260).

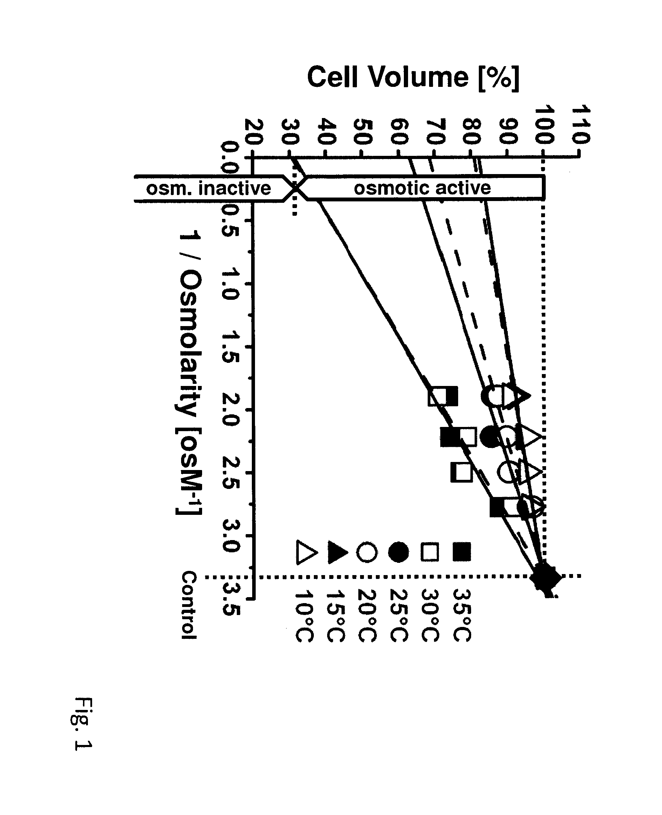

Further experiments of the present inventors demonstrated that already in the range from +35°C to +10°C a considerable reduction of the osmotically active portion of a cell, i.e. the aqueous phase, can be observed. Fig. 1 shows that the portion of the aqueous phase decreases from about 69% of the total cell volume at 35°C to about 17% of the total cell volume at 10°C (as indicated by the point of intersection of the regression line with the axis of the cell volume) and 22% of the control at 35°C.

The implications associated with the osmoregulation of cells during cryopreservation have been largely disregarded in the past. It is only known to add osmolytes to an external cryomedium in order to assist the dehydration of the cells. A considerable dehydration and concomitant shrinking of the cells is considered to be desirable or even required in order to prevent destruction of the membranes of the cells by the extending ice crystals, to cause the crystallization of less water in the cytoplasm, and to ensure that folded membrane material is available for closing cracks and cryo-defects when the fluidity of the membrane lipids is restored after thawing.

The present inventors postulated that the survival rate and vitality of cryopreserved cells might be improved if the cells are provided with means enabling to revert the (passive) volume reduction which occurs during the freezing step in the course of the thawing process with increased efficiency. The inventors further postulated that such a means could be the contact with an added signal or effector protein/peptide/compound which affects the osmoregulation and water or ion transporting processes of the target cells to be cryopreserved. In view of published data showing that the peptide hormone vasopressin regulates the activity of aquaporins and of cation channels via specific receptors under physiogical conditions (Stockand (2010), Kidney Int., 78, 849-856; and Boone & Deen (2008), Pflugers Archive - European Journal of Physiology, 456, 1005-1024), this peptide and similar acting compounds appeared to be promising candidates for a suitable effector.

In the Examples below, it is demonstrated that the addition of vasopressin to target cells to be cryopreserved actually improved the survival rate and viability of such cryopreserved cells considerably.

Principally, the signal or effector protein/peptide/- compound used in the present invention is not especially limited and may be any protein/peptide or compound, in particular organic compound, having at least one of the properties recited in claim 1.

In a preferred embodiment, the signal or effector protein/peptide/compound is a signal or effector protein/peptide. A protein as defined herein comprises a sequence at least 20 amino acids whereas a peptide a defined herein comprises a sequence of about 2 - 19 amino acids.

More specifically, the signal or effector protein/- peptide/compound is selected from the group comprising proteins/peptides or compounds, in particular organic compounds, which effect the activity of aquaporins, ion, protein or sugar transporting systems. A large number of such ion, protein or sugar transporting systems are well-known in the art and some non-limiting specific examples are NHE1, NKCCl and SGLT1.

In a preferred embodiment, the signal or effector protein/peptide/compound, in particular signal or effector protein/peptide, affects the activity of aquaporins or ion channels, in particular hypertonicity-induced cation channels (HICCS),for example TRPM2 and αENaC.

More specifically, the signal or effector protein/- peptide/compound is selected from the group comprising antidiuretic hormones, such as the peptide hormone vasopressin and its derivatives, in particular derivatives wherein one or more amino acid substitutions have been effected without essentially diminishing its effector activity (e.g. the amino acid at position 8 may be arginine, lysine or another amino acid), aldosteron and its derivatives, other antidiuretic mineralocorticoids, cytokines, in particular TNF-α, and other substances, in particular proteins/peptides, that may affect HICCS.

One example of such a hypertonicity-induced cation channel is the epithelial Na⁺ channel ENaC and particularly its α unit αENaC is regulated by vasopressin. αENaC is expressed in a multitude of different cells (including non-epithelial cells as well). According to the expression atlas EMBL-EB1 (dated 23.4. 2013) 106 cell types and 389 cell lines expressing the same are known so far. Thus, the osmoregulation and other transporting processes mediated by this ion channel of a large number of different cell types can be affected via vasopressin.

For cell types which do not express this specific ion channel, other known signal or effector proteins/- peptides/compounds which regulate other ion channels can be used in an analogous manner.

Typically, the signal or effector protein/peptide/compound is present in the medium containing the cells in a concentration in the range from 1 nM to 1 µM, preferably in the range from 10 nM to 500 nM.

The medium may be any suitable medium known in the art, in particular any medium suitable for cultivation and maintainance of the respective cells. The medium may be, e.g. DMEM or MEM.

Preferably, the contacting step is conducted before cooling the cells to a temperature below 0°C.

In a specific embodiment of the method of the invention, the cells are incubated with the signal or effector protein/peptide/compound for a period in the range from 2 min to 48 hrs, preferably in the range from 1 h to 4 hrs, at a temperature in the range from 40°C to 0°C, preferably from 37°C to 0°C or 37°C to 4°C, more preferred about 37°C to 20°C, before cooling the cells to a temperature below 0°C.

In this embodiment, the cells are preferably essentially separated from the signal or effector protein/peptide/- compound, e.g. by means of a medium exchange or dialysis, before cooling the cells to a temperature below 0°C. Alternatively, the contacting step is conducted after cooling the cells to a temperature below 0°C and thawing the cells to a temperature above 0°C.

In a further alternative embodiment of the method of the invention, a first contacting step is conducted before cooling the cells to a temperature below 0°C and a second contacting step is conducted after cooling the cells to a temperature below 0°C and thawing the cells to a temperature above 0°C.

Typically, the cells are cooled below 0°C with a cooling rate in the range from -5°C/min to -0.1°C/min, preferably about -1°C/min, to a temperature in the range from -40°C to -196°C, preferably in the range from -80°C to -196°C.

The cryomedium may be any suitable medium known in the art for cryopreservation. More specifically, the cryomedium may be selected from the group comprising a conventional cell culture medium, for example DMEM or MEM, which also contains DMSO or glycerol, for example 5-20%, preferably about 10% DMSO.

Principally, the cells suitable for cryopreservation according to the present invention are not especially limited. The cells may be selected from the group comprising prokaryotic cells, including bacterial cells and archaebacterial cells, eukaryotic cells, including animal cells, in particular mammalian cells, plant cells and fungal cells, artificial cells and cell constructs.

The cells may be native cells or cells which have been modified, e.g. by means of genetic engineering. Said modification may in particular comprise the introduction of additional cell components (e.g. additional genetic material), the substitution of native cell components with corresponding components from other native cells or artificial constructs, and the deletion of specific cell components as well as combinations thereof.

The cells may also be synthetically prepared artificial cells and vesicles, which comprise or consist of components of native cells, in particular membrane components, and are capable to be affected by a signal or effector protein/- peptide as defined above.

The cells suitable for cryopreservation according to the present invention may be stem cells, differentiated cells, oocytes, or spermatocytes or any other type of cells.

The cells may be single cells or part of a cell aggregate, tissue or an organism, including an embryo, preferably a non-human embryo.

### Brief Description of the Figures

**Fig. 1** shows an Boyle van't Hoff plot: passive volume decrease of HepG2 cells as a function of the external osmolarity (cell volume (%) versus osM⁻¹) at various temperatures.
**Fig. 2** shows the transient increase of HICC current densities (pA/pF) of cryopreserved HeLa cells after thawing.

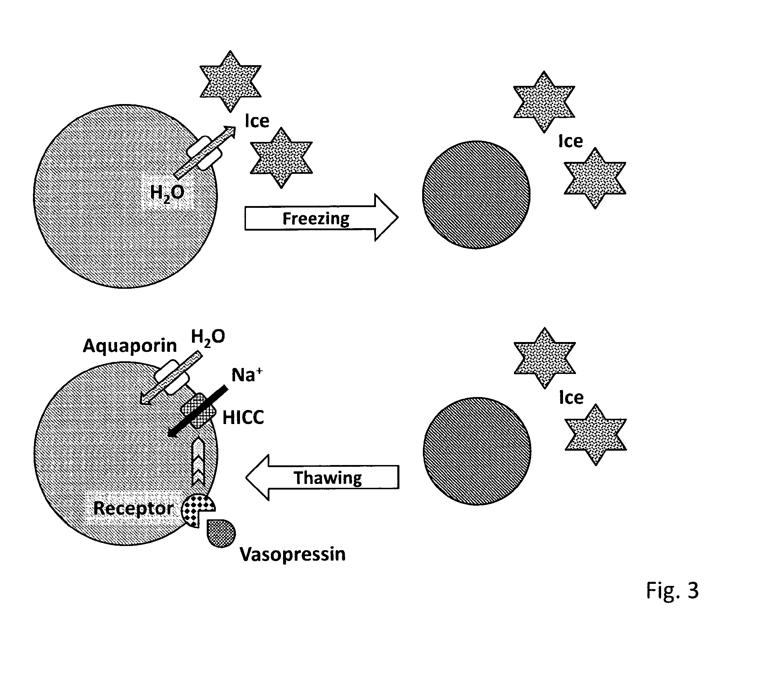

**Fig. 3** schematically depicts the freezing and thawing process of cells.
**Fig. 4** shows the relative survival rates of HepG2 and HeLa cells (Fig. **4A****)** and HDMEC cells (Fig. **4B****)** after cryopreservation, wherein the cells have been incubated for 1 h in the presence and absence of vasopressin before starting the cryoprotocol.
**Fig. 5** shows the proliferation of HepG2, HeLa and HDMEC cells (confluence versus time) cultured without cryopreservation (control) and after cryopreservation wherein the cells have been incubated for 1 h in the presence and absence of vasopressin before starting the cryoprotocol.

The following non-limiting examples are provided to illustrate the present invention in more detail, however, without limiting the same to the specific features and parameters thereof.

### EXAMPLE 1

### Cryopreservation of cells in the absence and presence of vasopressin

HeLa cells and HepG2 cells (a human liver cell line) which both express the α unit of the cation channel ENaC as well as HDMEC cells which do not express αENaC were cultivated under standard conditions (37°C, 5% CO₂) and incubated in a culture medium (e.g. MEM, DMEM or Endothelial Cell Growth Medium MV) for 1 h in the presence and absence of 100 nM vasopressin at 37°C, 5% CO₂ just before cryopreservation. After replacing the vasopressing-containing medium by a fresh culture medium without vasopressin, the cells were cooled to +5°C and 10% DMSO was added.

Subsequently the cells were slowly cooled to a target temperature of -50°C or -80°C with a cooling rate of 1°C/min.

The cells were stored for a period of time in the range from 2 to 10 days.

### EXAMPLE 2

### Characterization of cryopreserved cells

The survival rates of Hela, HepG2 and HDMEC cells which had been cryopreserved according to the protocol of Example 1 and of corresponding non-cryopreserved control cells were quantitatively determined with a coulter counter.

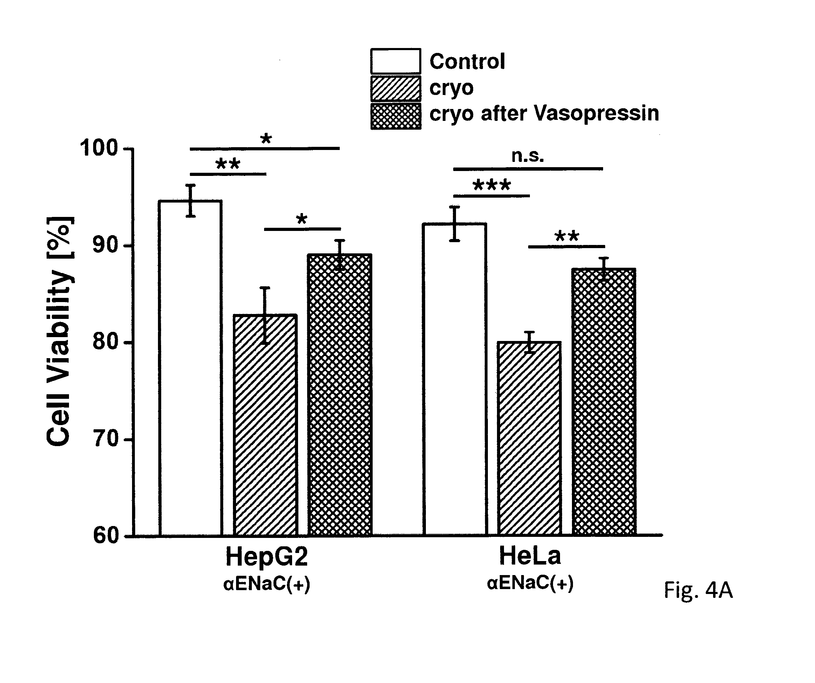

As shown in Fig. 4A, the survival rates of non-cryopreserved HepG2 and Hela cells were about 95% and 93%, respectively. After cryopreservation, the survival rates dropped to 83% and 81%, respectively. The survival rates considerably increase to about 89% and 88%, respectively, if 100 nM vasopressin is added to the culture medium prior to cryopreservation.

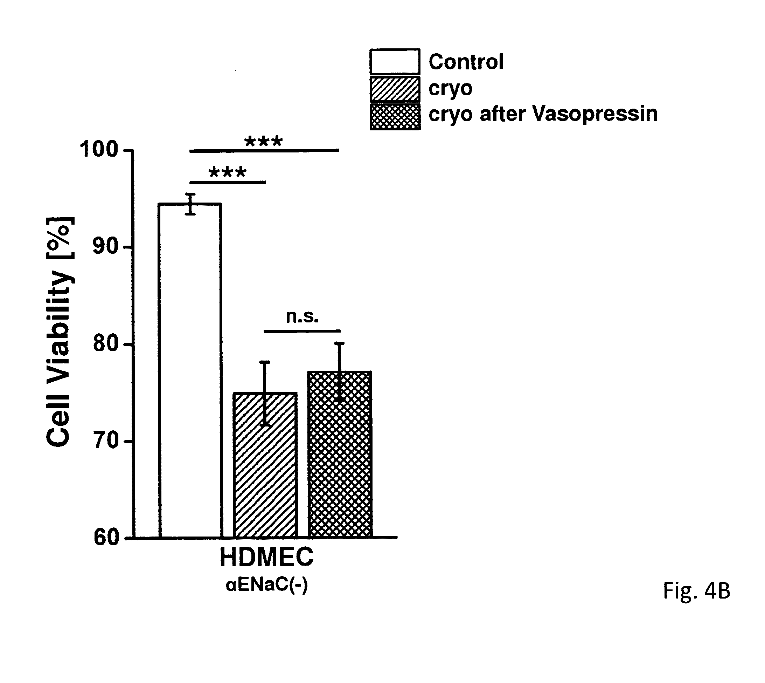

Fig. 4B shows that non-cryopreserved HDMEC cells had a survival rate of about 94% which dropped to about 75 % after cryopreservation. Contrary to the above Hela and HepG2 cells, the addition of vasopression had no cryoprotective effect in this system. It is assumed that this critical difference is due to the absence of the vasopressin-regulated cation channel αENaC in HDMEC cells.

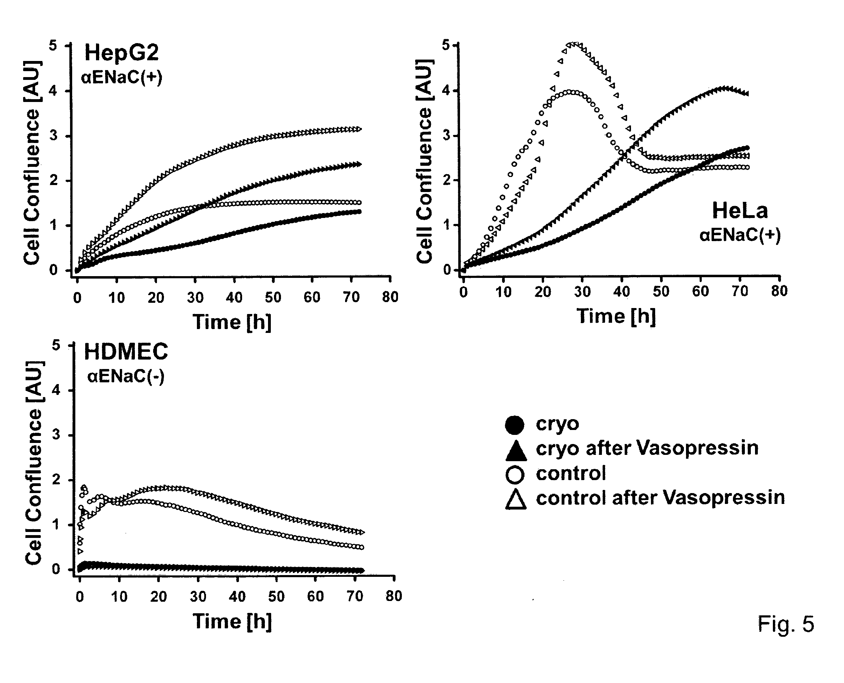

In a further experiment, the proliferation of Hela, HepG2 and HDMEC cells has been studied. Fig. 5 shows the proliferation of these cell types in a range of 0 to 72 hours after commencement of a cultivation. Here, the electric impedance was used to indicate the degree of confluence of a monolayer ("xCELLigence"-system, Roche). In the control, non-cryopreserved HepG2 cells reach their maximal value after about 30 h and the presence of vasopressin further stimulates the proliferation during this entire time period (Fig. 5A). The same applies to the proliferation of HeLa cells in the presence of vasopressin (Fig. 5B). However, the stimulating effect of vasopressin is especially pronounced after a cryopreservation. The proliferation of both HepG2 and HeLa cells (cryopreserved for 2 to 10 days at -50°C) is considerable increased during the entire time period.

In a supplemental experiment, amiloride, a drug which is known to block ENaC channels, was also added to HepG2 cells and in the presence of both vasopressin and amiloride the proliferation of the HepG2 cells was drastically decreased after cryopreservation (data not shown).

In contrast to this findings for HepG2 and HeLa cells, the proliferation of HDMEC cells was not significantly increased by vasopressin either after a cryopreservation or without (Fig. 5C).

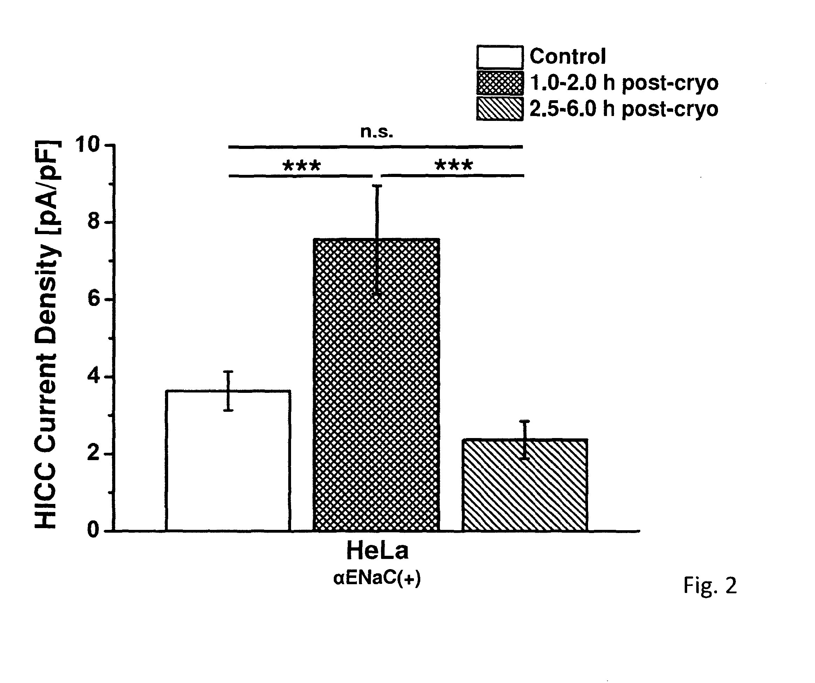

In patch clamp experiments with HepG2 and HeLa cells which were reverted to physiological temperatures after a cryopreservation, a considerable transient increase of the HICC activity (as indicated by increased current densities) was observed (Fig. 2). This finding supports the hypothesis that HICC channels are strongly involved in the rehydration of cells after a cryopreservation treatment and that the beneficial effect of vasopressin is mainly due to a stimulation of this necessary rehydration.

## Claims

1. Use of a signal or effector protein/peptide/compound having at least one of the following properties:
- capable to affect the osmoregulation of cells,
- capable to affect general transporting processes in cells which result in notable differences of the physiological parameters of cooled cells before and after freezing and/or of the distribution of osmolytes and water in said cells,
- capable to affect regulatory processes which involve membrane-bound transporters,
as a cryoprotectant for cells.

2. A method for cryopreservation of cells, comprising at least the following steps:
a) contacting the cells with a signal or effector protein/peptide/compound having at least one of the following properties:
- capable to affect the osmoregulation of cells,
- capable to affect general transporting processes in cells which result in notable differences of the physiological parameters of cooled cells before and after freezing and/or of the distribution of osmolytes and water in said cells,
- capable to affect regulatory processes which involve membrane-bound transporters,
for a predetermined time which is sufficient to allow the signal or effector protein/peptide/compound to display a cryoprotective effect on said cells, and
b) cooling the cells to a target temperature below 0°C.

3. The method according to claim 2, wherein the cells are provided in a medium and the signal or effector protein/peptide/compound is present in the medium in an effective concentration to act as a cryoprotectant for the cells.

4. The method according to claim 3, wherein the signal or effector protein/peptide/compound is present in the medium in a concentration in the range from 1 nM to 1 µM, preferably 10 nM to 500 nM.

5. The method according to any one of claims 2 to 4, wherein the contacting step is conducted before cooling the cells to a temperature below 0°C.

6. The method according to claim 5, wherein the cells are incubated with the signal or effector protein/- peptide/compound for a period in the range from 2 min to 48 hrs, preferably in the range from 1 h to 4 hrs, before cooling the cells to a temperature below 0°C.

7. The method according to claim 5 or 6, wherein the cells are separated from the signal or effector protein/peptide/compound, e.g. by means of a medium exchange or dialysis, before cooling the cells to a temperature below 0°C.

8. The method according to any one of claims 2 to 4, wherein the contacting step is conducted after cooling the cells to a temperature below 0°C and thawing the cells to a temperature above 0°C or wherein a first contacting step is conducted before cooling the cells to a temperature below 0°C and a second contacting step is conducted after cooling the cells to a temperature below 0°C and thawing the cells to a temperature above 0°C.

9. The method according to any one of claims 2-8, wherein the cells are cooled below 0°C with a cooling rate in the range from -5°C/min to -0.1°C/min, preferably about -1°C/min, to a temperature in the range from -40°C to -196°C.

10. The use according to claim 1 or the method according to claims 2-9, wherein the signal or effector protein/peptide/compound is selected from the group comprising antidiuretic hormones, in particular vasopressin and its derivatives, aldosteron and its derivatives, cytokines, in particular TNF-a, that affect hypertonicity-induced cation channels (HICCS).

11. The use or method according to any one of claims 1-10, wherein the signal or effector protein/peptide/- compound affects the activity of aquaporins, ion, protein or sugar transporting systems.

12. The use or method according to claim 11, wherein the signal or effector protein/peptide/compound affects the activity of aquaporins or ion channels, in particular HICCS.

13. The use or method according to any one of the preceding claims, wherein the cells are selected from the group comprising prokaryotic cells and eukaryotic cells, including animal cells, in particular mammalian cells, plant cells and fungal cells, artificial cells and cell constructs.

14. The use or method according to claim 13, wherein the cells are stem cells, differentiated cells, oocytes, or spermatocytes.

15. The use or method according to claim 13 or 14, wherein the cells are part of a cell aggregate, tissue or anorganism, including an embryo.
